# EUROPÄISCHE PATENTSCHRIFT

(11) **EP 2 174 019 B1**
(45) Veröffentlichungstag und Bekanntmachung des Hinweises auf die Patenterteilung: **23.03.2011**
(21) Anmeldenummer: 08784285.2
(22) Anmeldetag: 03.07.2008
(51) Int. Cl.: F16B 12/24, F16B 13/02, F16B 13/04, F16B 13/12

(54) **DÜBEL FÜR SELBSTTÄTIGEN DECKPLATTENHINTERGRIFF UND DESSEN SETZVERFAHREN**
DOWEL FOR AUTOMATICALLY ENGAGING BEHIND COVER PANELS, AND METHOD FOR PLACING IT
CHEVILLE DESTINEE A VENIR EN PRISE AUTOMATIQUEMENT PAR L'ARRIERE AVEC DES PANNEAUX DE RECOUVREMENT ET SON PROCEDE DE POSE

(30) Priorität: 04.07.2007 DE 102007031183
(43) Veröffentlichungstag der Anmeldung: 14.04.2010
(73) Patentinhaber: Zimmer, Günther, 77866 Rheinau (DE); Zimmer, Martin, 77866 Rheinau (DE)
(72) Erfinder: Zimmer, Günther, 77866 Rheinau (DE); Zimmer, Martin, 77866 Rheinau (DE)
(74) Vertreter: Thämer, Wolfgang
(86) Internationale Anmeldenummer: PCT/DE2008/001097
(87) Internationale Veröffentlichungsnummer: WO 2009/003461

(56) Entgegenhaltungen:
- EP-A- 0 290 654
- DE-A1- 2 753 519
- US-A- 3 516 324
- US-A- 4 259 890

## Beschreibung

Die Erfindung betrifft einen Dübel zur Befestigung an - in Stützkernbauweise gefertigten - flächigen Bauteilen mit einer ersten und einer zweiten Deckplatte und mindestens einer Stützkernzwischenlage, wobei der Dübel mindestens einen - zumindest ein Befestigungsmittel aufnehmenden - Spreizkörper und mindestens einen im Spreizkörper geführten Keilkörper umfasst.

Die flächigen Bauteile in Stützkernbauweise werden oft auch als Sandwichplatten, Wabenplatten oder Leichtbauplatten bezeichnet. Alle Plattentypen haben im Möbelbau in der Regel Decklagen aus Dünnspanplatten, mittel- oder hochdichten Faserplatten, Sperrholz- oder Hartfaserplatten. Die Sandwichplatten haben dabei als Mittelschicht bzw. Stützkern z.B. PolyurethanSchaum oder Polystyrol. Bei den Wabenplatten werden als Zwischenlagen oft Wellstegeinlagen oder sog. expandierte Honigwaben eingesetzt. Die meisten Leichtbauplatten haben eine Rohdichte, die unter 500 kg/m³ liegt. Werden für die Zwischenlage keine brandhemmenden Aluminiumschäume oder Blähglas verwendet, liegt die Rohdichte unter 350 kg/m³. Zum Vergleich beträgt die Rohdichte einer unbeschichteten Spanplatte ca. 600 bis 750 kg/m³.

Sollen an Leichtbauplatten Beschläge z.B. durch Anschrauben befestigt werden, hat man das Problem, dass die Befestigungsmittel in der Regel nur an den relativ dünnen Decklagen bzw. Deckplatten Halt finden. Eine typische Lösung hierfür sind Spreizdübel, wie sie in der Druckschrift
DE 20 2004 000 474 U1 offenbart sind. Die Spreizdübel haben jedoch den Nachteil, dass sie vorn und hinten die obere Platte großflächig umgreifen. Der hintere Umgriff verdrängt zudem weiträumig das Stützkernmaterial in der Umgebung der Bohrung, wodurch sich bei einer auf den Dübel wirkenden Zuglast die Deckplatte schneller vom Kernmaterial löst und abhebt.

Ein anderer Dübel, der diesen Nachteil vermeidet, ist aus dem Internetkatalog (September 2006) des Unternehmens Fischer Befestigungssysteme GmbH bekannt. Er wird dort unter der Bezeichnung SLM-N geführt. Der Dübel hat einen rohrförmigen Spreizkörper, in dessen Bohrung ein zumindest bereichsweise kegelstumpfförmiger Keilkörper am hinteren, geschlitzten Spreizkörperende eingesteckt ist. Der Keilkörper hat eine zentrale Bohrung mit Innengewinde. Wird der Keilkörper zum Beispiel durch das Anziehen einer im Gewinde des Keilkörpers sitzenden Halteschraube in den Spreizkörper hineinbewegt, spreizt sich dieser unter Festklemmen im unteren Bereich der Bohrung. Allerdings würde dieser Dübel nur in einem sehr formsteifen Kernmaterial fest sitzen.

US 4,259,890 offenbart einen Dübel zur Befestigung an flächigen Bauteilen , wobei der Dübel mindestens einen - zumindest ein Befestigungsmittel aufnehmenden - Spreizkörper und mindestens einen im Spreizkörper geführten Keilkörper umfasst,
- wobei der gesetzte Dübel in einer Ausnehmung des Bauteils steckt, die als Sacklochausnehmung ausgeführt ist,
- wobei der Spreizkörper einen oberen Sitzabschnitt mit mindestens einer zumindest annähernd zylindrischen Zylinderzone hat,
- wobei der Spreizkörper einen unteren Spreizabschnitt mit mindestens zwei abspreizbaren in der Ausnehmung festklemmbaren Klemmelementen hat,
- wobei der Keilkörper im mittleren oder unteren Bereich vor einer sich in Dübelsetzrichtung verjüngenden Ausnehmung des Spreizkörpers längsverschieblich sitzt,
- wobei bei gesetztem Dübel die Zylinderzone zumindest bereichsweise in der Bohrung des Bauteils anliegt und die Klemmelemente in der Sacklochausnehmung durch den vorwärts geschobenen Klemmkörper radial verklemmt anliegen.

Der vorliegenden Erfindung liegt das Problem zugrunde, einen Dübel für Leichtbauplatten zu entwickeln, der bei einfacher Montage fest, sicher und dauerhaft in der Leichtbauplatte hält. Eine Montage an oder in festen Platteneinlagen oder an den jeweiligen Plattenriegeln ist hierbei nicht vorgesehen.

Das Problem wird mit den Merkmalen der Ansprüche 1 und 9 gelöst. Der gesetzte Dübel steckt in einer Ausnehmung der Leichtbauplatte, die die erste Deckplatte und die Stützkernzwischenlage durchdringt und als Sacklochausnehmung in die zweite Deckplatte bereichsweise hineinragt. Der Spreizkörper hat einen oberen Sitzabschnitt mit mindestens einer zumindest annähernd zylindrischen Zylinderzone. Der Spreizkörper hat ferner einen Hintergriffsabschnitt mit mindestens zwei elastisch abgespreizten Hintergriffselementen. Der Spreizkörper hat weiter einen unteren Spreizabschnitt mit mindestens zwei abspreizbaren in der zweiten Deckplatte festklemmbaren Klemmelementen. Der Keilkörper sitzt längsverschieblich im mittleren oder unteren Bereich vor einer sich in Dübelsetzrichtung verjüngenden Ausnehmung des Spreizkörpers. Bei gesetztem Dübel liegt die Zylinderzone zumindest bereichsweise in der Bohrung der ersten Deckplatte an, die Hintergriffselemente stützen sich hinter der ersten Deckplatte an dieser aufgespreizt ab und die Klemmelemente liegen in der Sacklochausnehmung durch den vorwärts geschobenen Klemmkörper radial verklemmt an.

In Anspruch 9 wird beschrieben, wie ein derartiger Dübel in eine entsprechende Bohrung der Leichtbauplatte eingesetzt und verankert wird.

Mit der vorliegenden Erfindung wird ein Dübel für Leichtbauplatten geschaffen, der bei hoher Auszugskraft sowohl manuell als auch maschinell schnell und sicher gesetzt werden kann. Weitere Einzelheiten der Erfindung ergeben sich aus den Unteransprüchen und den nachfolgenden Beschreibungen schematisch dargestellter Ausführungsformen.
- Figur 1:: Dimetrische Darstellung eines Dübels mit montiertem Hintergriffsabschnitt von schräg oben;
- Figur 2:: wie Figur 1, jedoch von schräg unten;
- Figur 3:: Schnitt des Dübels nach Figur 1 mit Teilen einer Dübelsetzeinrichtung;
- Figur 4:: wie Figur 3, jedoch mit geringfügig zurückgezogenem Dübel;
- Figur 5:: wie Figur 4, jedoch mit verschobenem Keilkörper;
- Figur 6:: wie Figur 5, jedoch mit befestigtem Beschlag;
- Figur 7:: Dimetrische Darstellung eines Dübels mit angeform- tem Hintergriffsabschnitt von schräg oben;
- Figur 8:: wie Figur 7, jedoch von schräg unten;
- Figur 9:: Schnitt des ungespreizten Dübels nach Figur 7;
- Figur 10:: Schnitt des gespreizten Dübels nach Figur 7.

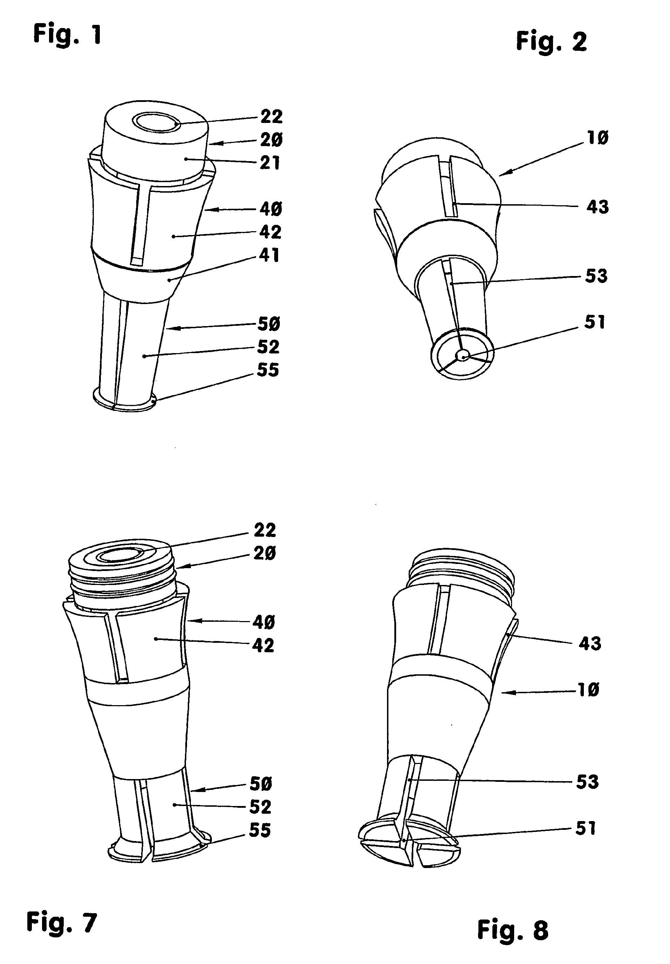

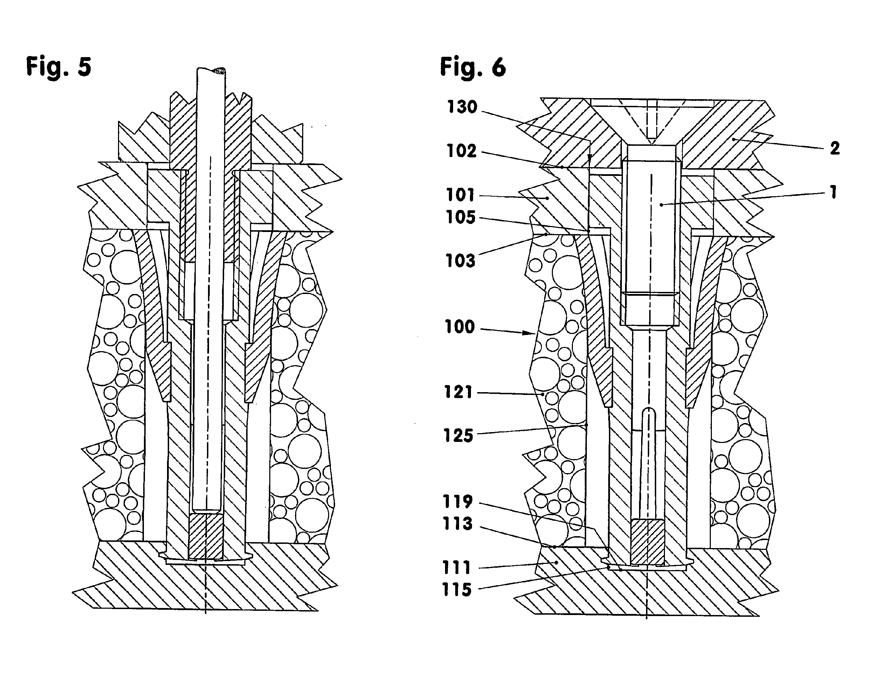

Die Figuren 1 und 2 zeigen einen unverformten Dübel. Der Dübel hat einen Spreizkörper (10), der aus drei größeren Bereichen (20, 40, 50) besteht. Ein oberer Bereich ist der Sitzabschnitt (20) mit der Zylinderzone (21). Der Sitzabschnitt (20) hat eine zentrale Gewindebohrung (22), die der Aufnahme von Befestigungselementen, wie z.B. Schrauben (1), dient, vgl. Figur 6. Ein mittlerer Bereich ist ein Hintergriffsabschnitt (40), der hier z.B. vier Hintergriffselemente (42) umfasst. Ein unterer Bereich (50) ist ein Spreizabschnitt, der z.B. drei Klemmelemente (52) aufweist.

Der Dübel dient z.B. der Beschlagsbefestigung in Leichtbauplatten (100) ohne Riegel und festen Einlagen, vgl. Figur 6. Die gezeigte Leichtbauplatte (100) umfasst zwei Deckplatten (101) und (111) und einen dazwischen liegenden Stützkern (121). Jede Deckplatte (101, 111) besteht im Ausführungsbeispiel aus einer Dünnspanplatte. Der Stützkern (121) ist hier z.B. ein PU-Schaumkern. Die Deckplatten (101, 111) sind mit ihren innenliegenden Oberflächen (103, 113) mit dem plattenförmigen Stützkern (121) verklebt. Die dargestellte Leichtbauplatte hat z.B. eine Wandstärke von 20 bis 40 Millimetern. Jede Deckplatte ist hier 2 bis 8 Millimeter dick. Statt des Schaumkerns kann sie u.a. auch einen Wabenkern haben. In der Leichtbauplatte befindet sich eine Bohrung (130), die sich aus den Abschnitten (105), (125) und (115) zusammensetzt. Letzterer Abschnitt (115) ist eine Sacklochbohrung. Ihre Tiefe beträgt hier 25 bis 75% der Materialstärke der unteren Deckplatte (111). Ggf. kann anstelle der Sacklochbohrung (115) eine Durchgangsbohrung verwendet werden. Für einen Dübeltyp, wie er in den Figuren 1 und 2 dargestellt ist, kann u.a. die Sacklochbohrung (115) einen kleineren Durchmesser haben als die Bohrungen (105) und (125).

Die Leichtbauplatte (100) kann auch gewölbt, z.B. zylindrisch oder sphärisch, ausgeführt sein, sofern die Materialstärke des Stützkerns (121) zumindest annähernd konstant ist.

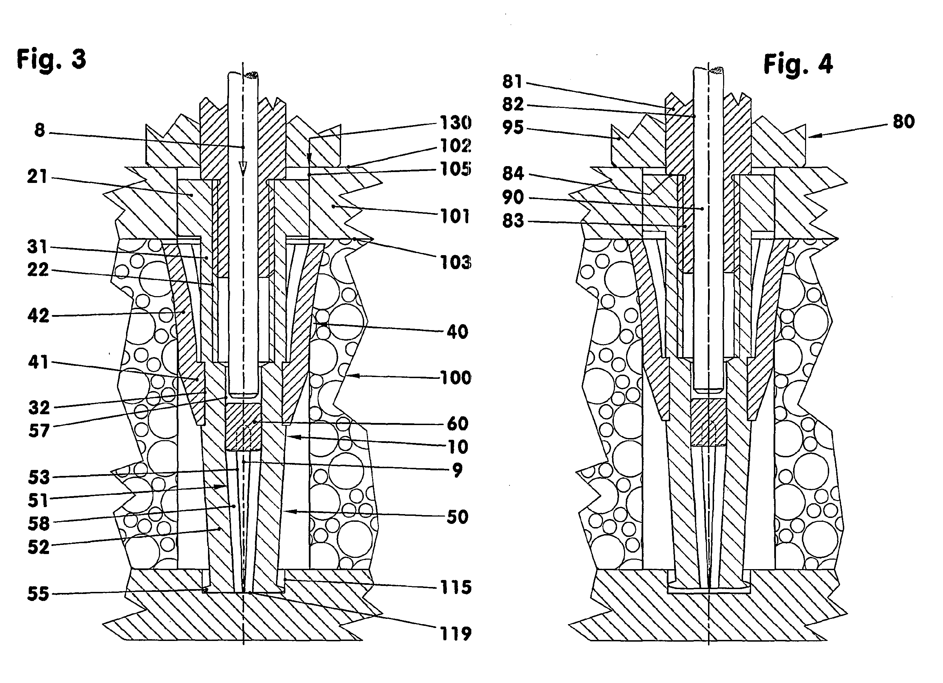

Um den Dübel montieren zu können wird die erste Deckplatte (101) und der Stützkörper (121) durchbohrt. Die zweite Deckplatte (111) wird entsprechend tief aufgebohrt. Die Deckplatte (111) wird hier also nicht durchbohrt. Als Bohrwerkzeug wird beispielsweise ein Spiralbohrer benutzt, der einen Spitzenwinkel von 180 Winkelgraden aufweist. Ggf. kann auch ein Stirnsenker verwendet werden. Je nach Dübelbauart kann die Bohrung (130) auch mit einem Stufensenker gebohrt werden, z.B. wenn die Sacklochbohrung (115) der unteren Deckplatte (111) einen kleineren Durchmesser haben soll als die restliche Bohrung (105, 125), vgl. Figuren 4 bis 6. Die entstandene Ausnehmung, bzw. Bohrung (130) wird beispielsweise mit Pressluft freigeblasen oder leergesaugt.

Die Figur 3 zeigt den Dübel unmittelbar nach dem ersten Einsetzen in die Bohrung (130) einer Leichtbauplatte (100) mit Hilfe einer Dübelsetzeinrichtung (80). Die Dübelsetzeinrichtung (80) umfasst hier zumindest ein Greifrohr (81), einen Spreizstempel (90) und einen Niederhalter (95), vgl. Figur 4.

Das Greifrohr (81) ist ein z.B. rohrförmiges Bauteil, das eine Durchgangsbohrung (82) aufweist und an seinem vorderen Ende einen Gewindeabschnitt (83) trägt. Zur Aufnahme des Dübels wird der Gewindeabschnitt (83) in die dübelseitige Gewindebohrung (22) eingeschraubt. Bei Dübeln, deren zentrale Bohrung Kein Gewinde aufweist, erfasst das Greifrohr (81) den Dübel in der zentralen Ausnehmung z.B. mittels kraftschlüssiger Greifelemente.

Alternativ kann die Bohrung (22) zur Aufnahme von nichtmetrischen Schrauben, z.B. Spanplattenschrauben oder Holzschrauben, einen rechteckigen, ovalen, polygonförmigen oder sternförmigen Querschnitt haben. Ggf. verjüngt sich der Ausnehmungsquerschnitt vom Bohrungsanfang zum Bohrungsende hin. Für alle diese Formen gibt es die passenden Greifelemente.

In der Bohrung des Greifrohres (81) ist der Spreizstempel (90) längsverschiebbar geführt gelagert. Das Greifrohr (81) selbst sitzt längsgeführt in dem Niederhalter (95).

Das Greifrohr (81) liegt mit seinem Wellenbund (84) definiert an der oberen Stirnfläche (23) des Dübels an. Der Niederhalter (95) liegt auf der Oberfläche (103) der Leichtbauplatte (100) auf.

Der in Figur 3 gezeigte Dübel steckt mit seiner Zylinderzone (21) in der Bohrung (105). An diese Zylinderzone (21) schließt sich ein Rohrabschnitt (31) an. Der Rohrabschnitt (31) endet in einer Außenringnut (32). Er wird umgeben von dem Hintergriffsabschnitt (40).

Letzterer besteht aus einem Ring (41), an dem hier vier Hintergriffselemente (42) angeformt sind. Der Ring (41) sitzt axial und radial fixiert kraft- und formschlüssig in der ca. 0,1 bis 0,3 mm tiefen Außenringnut (32). Er verjüngt sich z.B. kegelmantelförmig zum Spreizabschnitt (50) hin. Die elastischen Hintergriffselemente (42) sind - in Schnitt nach Figur 3 gesehen - z.B. sichelförmig nach außen gespreizt. Sie enden kurz unterhalb der Zylinderzone (21). Ihr maximaler Außendurchmesser ist z.B. 2 bis 3 mm größer als der Innendurchmesser der Bohrung (105). Die Hintergriffselemente (42) sind durch Längsschlitze (43) getrennt, vgl. Figur 2. Die seitlichen Wandungen der Hintergriffselemente (42), also die an die Längsschlitze (43) angrenzenden Wandungen, liegen nur beispielhaft in Ebenen, in denen auch die Mittellinie (9) des Dübels liegt.

Die Gewindebohrung (22) der Zylinderzone (21) setzt sich im Rohrabschnitt (31) fort. Der Rohrabschnitt (31) hat einen Außenradius, der kleiner ist als die Differenz aus dem Zylinderzonenradius und der Wandstärke des einzelnen Hintergriffselements (42).

Unterhalb der Außenringnut (32) befindet sich der kegelmantelförmig nach unten - also in Richtung Boden (119) - verjüngende Spreizabschnitt (50). Im Spreizabschnitt (50) befindet sich eine Bohrung (51), die im Bereich der Außenringnut (32) zylindrisch und unterhalb dieses Bereichs kegelstumpfmantelförmig ausgeführt ist. Im kegelstumpfmantelförmigen Bereich ist die Bohrung (51) zur Ausbildung von z.B. drei Klemmelementen (52) mit drei Längsschlitzen (53) versehen, vgl. auch Figur 2. Die Längsschlitze (53) werden nach unten hin schmäler. Ggf. sind die seitlichen Wandungen der Klemmelemente (52) zumindest bereichsweise ähnlich orientiert wie die seitlichen Wandungen der Hintergriffselemente (42).

Die Längsschlitze (53) haben eine 120°-Teilung. Ggf. sind sie spiralförmig, zick-zack-, mäander- oder zinnenförmig gewunden. Zur Kerbentlastung können die Längsschlitze (53) auch in radial angeordneten Ausrundungen enden.

Das untere Ende der Bohrung (51) hat nach Figur 3 einen Innendurchmesser, der kleiner ist als der halbe Innendurchmesser des zylindrischen Bereichs (57) der Bohrung (51).

Am unteren Ende des Spreizabschnitts (50) ist ein radial abstehender Steg (55) angeordnet. Der umlaufende Steg (55) wird jeweils durch die Längsschlitze (53) unterbrochen. Der Steg (55) hat z.B. eine radiale Höhe von ca. 0,3 bis 1 mm. Der maximale Durchmesser des Steges (55) ist bei radial zusammengedrückten Klemmelementen (52) kleiner als der Innendurchmesser des Rings (41). Somit kann der Ring (41) mit seinen Hintergriffselementen (42) von unten her auf den Spreizkörper (10) aufgeschoben werden.

Alternativ kann anstelle des Steges (55) auch ein ein- oder mehrgängiges Gewinde, eine umlaufende Querriffelung oder eine Noppenstruktur treten.

In Figur 3 ist ein Keilkörper (60) dargestellt, vgl. auch Figuren 4 bis 6. Der Keilkörper (60) ist hier ein zylindrisches Bauteil, das bei einem nicht montierten Dübel im zylindrischen Bereich (57) der Bohrung (51) sitzt. An seiner zylindrischen Außenfläche können Rastnocken oder dergleichen angeordnet sein, die in entsprechende Rastaussparungen der Bohrung (51) eingreifen. Auf diese Weise kann der Keilkörper (60) in bestimmten Positionen dauerhaft verrastet werden.

Ggf. kann der Keilkörper (60) auch eine Kugel sein.

Der Spreizkörper (10) und der Keilkörper (60) sind aus einem Kunststoff, z.B. aus einem Polyamid, gefertigt.

Figur 3 zeigt den Spreizkörper (10) nach Ablauf einer ersten Einsetzbewegung in die Bohrung (130). Hierbei wird der Spreizkörper (10) z.B. so weit in die Bohrung (130) eingeschoben, dass er den Grund (119) der Bohrung (115) berührt oder gerade noch nicht kontaktiert. Auf diese Weise ist sichergestellt, dass die Hintergriffselemente (42), die beim Durchschieben durch die Bohrung (105) radial gegen den Rohrabschnitt (31) gepresst wurden, nach dem Passieren der unteren Oberfläche (103) der oberen Deckplatte (101) frei kommen und sich selbsttätig vom Rohrabschnitt (31) wieder abspreizen.

Nach dem Abspreizen der Hintergriffselemente (42) wird der Spreizkörper (10) mittels des Greifrohres (81) entgegen der Dübelsetzrichtung (8) bewegt, um die oberen Stirnflächen oder Kanten der Hintergriffselemente (42) an der unteren Oberfläche (103) der oberen Deckplatte (101) anzulegen. Hierbei stützt sich die Dübelsetzeinrichtung (80) über den Niederhalter (95) an der äußeren Oberfläche (102) ab, vgl. Figur 4. Die Stirnfläche (23) des Spreizkörpers (10) liegt nun knapp unterhalb der Oberfläche (102).

In einem weiteren Verfahrensschritt werden die Klemmelemente (52) des Spreizkörpers (10) in der Sacklochbohrung (115) verklemmt. Dazu wird bei ortsfester Dübelsetzeinrichtung (80), d.h. der Niederhalter (95) und das Greifrohr (81) führen keine Relativbewegung zueinander aus, der Spreizstempel (90) gegen den Keilkörper (60) gefahren, um diesen in Dübelsetzrichtung (8) in der Ausnehmung (51) nach unten zu bewegen. Sobald der Keilkörper (60) in den konischen Bereich (58) der sich nach unten hin verjüngenden Ausnehmung (51) kommt, beginnen sich die Klemmelemente (52) zumindest annähernd radial nach außen abzuspreizen. Dabei krallen sich die einzelnen Abschnitte des Steges (55) in die Wandung der Sacklochbohrung (115). Der Klemmvorgang ist erst beendet, wenn der Keilkörper (60) fast das untere Ende des Spreizkörpers (10) erreicht hat, vgl. Figur 5. Die Bohrung (51) hat nun eine zumindest annähernd zylindrische Form. Die Längsschlitze (53) sind maximal gespreizt, vgl. Figur 6. Der Dübel sitzt fest in der Leichtbauplatte (100).

Abschließend wird der Spreizstempel (90) zurückgezogen, das Greifrohr (81) aus der Gewindebohrung (22) herausgeschraubt und die Dübelsetzeinrichtung (80) von der Leichtbauplatte (100) weggeschwenkt.

In Figur 6 wird ein an der Leichtbauplatte (100) befestigter Beschlag (2) gezeigt. Letzterer ist mittels einer Senkkopfschraube (1) am Dübel bzw. am festsitzenden Spreizkörper (10) verschraubt.

Die Figuren 7 und 8 zeigen ebenfalls einen noch unverformten Dübel mit einem zumindest drei Bereichen (20, 40, 50) umfassenden Spreizkörper (10). Allerdings ist dieser Dübel für eine Bohrung (130) geeignet, deren drei Abschnitte (105, 125, 115) alle den gleichen Durchmesser haben.

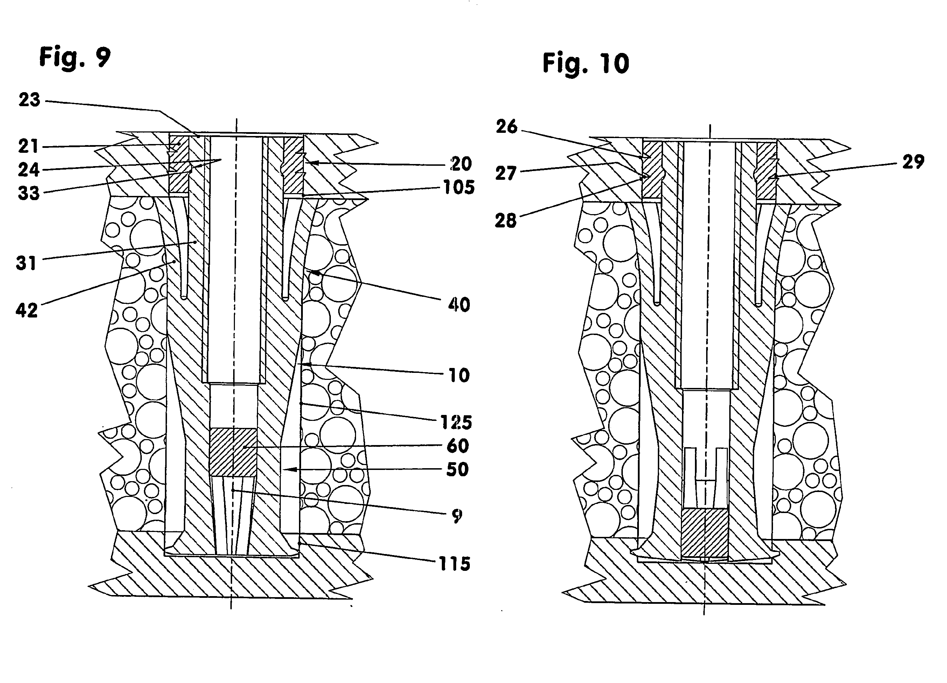

Nach den Figuren 9 und 10 verfügt der Spreizkörper (10) im Sitzabschnitt (20) über eine montierte Zylinderzone (21). Bei dieser Variante endet der Rohrabschnitt (31) an der Stirnfläche (23) des Spreizkörpers (10). Zwischen der Stirnfläche (23) und der Oberkante der Hintergriffselemente (42) befindet sich in der Außenwandung des Rohrabschnitts (31) eine umlaufende Nut (33). In diese Nut (33) greift - zur axialen Fixierung der Zylinderzone (21) am Rohrabschnitt (31) - ein z.B. passgenauer Umlaufsteg (24) der Zylinderzone (21) ein.

Die Zylinderzone (21) hat hier zwei ebenfalls umlaufende Widerhakenstege (26). Die geschlossenen, ringförmigen Widerhakenstege (26) haben einen dreieckigen Einzelquerschnitt, vgl. Figur 9 und 10, mit einer Stützflanke (27) und einer Rutschflanke (28). Sie stehen z.B. 0,15 Millimeter über die dortige zylindrische Außenkontur über. Oberhalb eines jeden Widerhakensteges (26) befindet sich ein umlaufender Ringkanal (29) mit einem ebenfalls dreieckigen Einzelquerschnitt. Der einzelne Ringkanal (29) ist jeweils so gestaltet, dass sich die Fläche der Stützflanke (27) vergrößert. Die Kontur von Ringkanal (29) und Widerhakensteg (26) ist z-förmig gestaltet. Durch diese spezielle Kontur sind die Widerhakenstege (26) in Eindrückrichtung nachgiebiger.

Die Widerhakenstege (26) bewirken u.a. ein verdrehsicherndes Verklemmen des Spreizkörpers (10) in der Bohrung (105). Zusätzlich dichten sie die Montagefuge zwischen dem Spreizkörper (10) und der Leichtbauplatte (100) ab, so dass dort weder Schmutz noch Feuchtigkeit eindringen kann. Auch kann auf diese Weise kein Stützkernmaterial in die Umgebung gelangen.

Alternativ hierzu kann der Sitzabschnitt (20) auch eine Vielzahl von Längsstegen aufweisen. Alle Längsstege verlaufen parallel zur Mittellinie (9) des Dübels. Auch hier hat jeder Steg einen z.B. dreieckigen Querschnitt, wobei seine Flanken z.B. einen 90°-Winkel einschließen. Ggf. nimmt der Querschnitt der Stege von oben nach unten zu. Dies erhöht die Dichtigkeit der Montagefuge.

Der Hintergriffsabschnitt (40) ist mit seinen Hintergriffselementen (42) nach den Figuren 9 und 10 ein integrales Bestandteil des Spreizkörpers (10). Die Hintergriffselemente (42) haben eine Gestalt, die schon aus der zuvor beschriebenen Variante bekannt ist.

Im Holzmöbelbau basiert die Befestigungsstabilität einer Beschlagbefestigung nicht nur auf dem Auszugswiderstand der in den tragenden Dübeln sitzenden Schrauben, sondern auch im Begrenzen der Setzbeträge und im Vermeiden eines Lösespiels quer zur Mittellinie der jeweiligen Schraube. Der hier vorgestellte Dübel sitzt quer zur Dübelmittellinie (9) zum einen über die Zylinderzone (21) fest in der Bohrung (105) der ersten Deckplatte (101). Zum anderen steckt sein Spreizabschnitt (50) festgeklemmt in der zweiten Deckplatte (111). Das bedingt zwei Wirkungen zur Förderung der Dübelhaltekraft. Zum einen übernimmt die untere Deckplatte (111) durch das Einkeilen des Spreizabschnitts (50) in die Bohrung (115) einen Teil der Dübelhaltekraft. Zum anderen wird der Dübel, bezüglich seiner Lage quer zur Dübelmittellinie (9), form- und kraftschlüssig fixiert. Da zudem der Dübel biegefest konstruiert ist, neigen die Schrauben in den Dübeln nicht zu einem das Lösen der Verbindung beschleunigenden Schrägstellen, so dass die Gefahr des unbeabsichtigten Lockerns oder Lösens des Beschlags minimiert oder sogar verhindert wird.

In den Ausführungsbeispielen ist der Keilkörper bezüglich seiner Außenkontur zumindest großteils ein rotationssymmetrischer Körper. Alternativ hierzu können seine einzelnen Querschnitte oder zumindest ein Teil davon auch quadratische, polygonale, ovale oder anders profilierte Querschnitte haben. Ggf. kann der Keilkörper (60) mit dem Spreizkörper (10) z.B. über ein Gewinde verbunden sein, so dass der Keilkörper (60) nicht in einer linearen, nichtrotierenden Rastbewegung, sondern über eine Einschraubbewegung montiert wird.

Selbstverständlich ist das Prinzip des Dübels nicht auf Dübel mit zumindest bereichsweise zylindrischer Außenkontur beschränkt. Der Dübel kann z.B. auch für eine Ausnehmung konstruiert werden, die einen - zumindest abschnittsweise - langlochförmigen oder ovalen Querschnitt hat.

### Bezugszeichenliste:

- 1: Befestigungsmittel, Schraube, Senkkopfschraube
- 2: Beschlag
- 8: Dübelsetzrichtung
- 9: Mittellinie des Dübels

- 10: Spreizkörper

- 20: Sitzabschnitt
- 21: Zylinderzone
- 22: Gewindebohrung
- 23: Stirnflächen, oben
- 24: Umlaufsteg
- 26: Widerhakenstege, Umlaufstege, Oberflächenstruktur
- 27: Stützflanke
- 28: Rutschflanke
- 29: Ringkanal, umlaufend

- 31: Rohrabschnitt
- 32: Außenringnut
- 33: Nut

- 40: Hintergriffsabschnitt
- 41: Ring
- 42: Hintergriffselemente
- 43: Längsschlitze

- 50: Spreizabschnitt
- 51: Bohrung
- 52: Klemmelemente
- 53: Längsschlitze
- 55: Steg, umlaufend
- 57: zylindrischer Abschnitt von (51)
- 58: kegelstumpfmantelförmiger Abschnitt von (51)

- 60: Keilkörper

- 80: Dübelsetzeinrichtung
- 81: Greifrohr
- 82: Durchgangsbohrung
- 83: Gewindeabschnitt
- 84: Wellenbund
- 90: Spreizstempel
- 95: Niederhalter

- 100: Sandwichplatte, Leichtkern-Verbundplatte; flächiges Bauteil in Stützkernbauweise
- 101: Deckplatte, oben
- 102: außenliegende Oberfläche
- 103: innenliegende Oberfläche
- 105: Bohrung

- 111: Deckplatte, unten
- 113: innenliegende Oberfläche
- 115: Sacklochbohrung, Sacklochausnehmung
- 119: Boden von (115)

- 121: Stützkern, Wabenkern, Schaumstoffkern
- 125: Bohrung

- 130: Gesamtbohrung, Ausnehmung

## Patentansprüche

1. Dübel zur Befestigung an - in Stützkernbauweise gefertigten
- flächigen Bauteilen (100) mit einer ersten (101) und einer zweiten Deckplatte (111) und mindestens einer Stützkernzwischenlage (121), wobei der Dübel mindestens einen - zumindest ein Befestigungsmittel aufnehmenden - Spreizkörper (10) und mindestens einen im Spreizkörper geführten Keilkörper (60) umfasst,
- wobei der gesetzte Dübel in einer Ausnehmung (130) des Bauteils (100) steckt, die die erste Deckplatte (101) und die Stützkernzwischenlage (121) durchdringt und als Sacklochausnehmung (115) in die zweite Deckplatte (111) bereichsweise hineinragt,
- wobei der Spreizkörper (10) einen oberen Sitzabschnitt (20) mit mindestens einer zumindest annähernd zylindrischen Zylinderzone (21) hat,
- wobei der Spreizkörper (10) einen Hintergriffsabschnitt (40) mit mindestens zwei elastisch abgespreizten Hintergriffselementen (42) hat,
- wobei der Spreizkörper (10) einen unteren Spreizabschnitt (50) mit mindestens zwei abspreizbaren in der zweiten Deckplatte (111) festklemmbaren Klemmelementen (52) hat,
- wobei der Keilkörper (60) bei nitch gesetztem Dübei im mittleren oder unteren Bereich vor einer sich in Dübelsetzrichtung verjüngenden Ausnehmung (51) des Spreizkörpers (10) längsverschieblich sitzt,
- wobei bei gesetztem Dübel die Zylinderzone (21) zumindest bereichsweise in der Bohrung der ersten Deckplatte (101) anliegt, die Hintergriffselemente (42) sich hinter der ersten Deckplatte (101) an dieser aufgespreizt abstützen und die Klemmelemente (52) in der Sacklochausnehmung (115) durch den vorwärts geschobenen Keilkörper (60) radial verklemmt anliegen.

2. Dübel gemäß Anspruch 1, **dadurch gekennzeichnet, dass** der Spreizkörper (10) zur Aufnahme des Befestigungsmittels (1) eine zentrale Gewindebohrung (22) aufweist.

3. Dübel gemäß Anspruch 1, **dadurch gekennzeichnet, dass** der Hintergriffsabschnitt (40) als separates Bauteil am Spreizkörper (10) zumindest formschlüssig befestigt ist.

4. Dübel gemäß Anspruch 1, **dadurch gekennzeichnet, dass** die im Spreizkörper (10) vorhandene Ausnehmung (51) zur Führung des Keilkörpers (60) einen zylindrischen (57) und einen kegelstumpfmantelförmigen Abschnitt (58) aufweist.

5. Dübel gemäß Anspruch 1, **dadurch gekennzeichnet, dass** der Keilkörper (60) zylinderförmig gestaltet ist.

6. Dübel gemäß Anspruch 1, **dadurch gekennzeichnet, dass** der Spreizkörper (10) zur Ausbildung der Klemmelemente (52) im Spreizabschnitt (50) zumindest bereichsweise längsgeschlitzt ist.

7. Dübel gemäß Anspruch 1, **dadurch gekennzeichnet, dass** bei gesetztem Dübel die in der Bohrung (105) sitzende Zylinderzone (21) des Spreizkörpers (10) zur Verdrehsicherung des Dübels eine Oberflächenstruktur (26) aufweist.

8. Dübel gemäß Anspruch 1, **dadurch gekennzeichnet, dass** der Sitzabschnitt (20) als separates Bauteil am Spreizkörper (10) zumindest formschlüssig befestigt ist.

9. Verfahren zur Montage eines Dübels in einem - in Stützkernbauweise gefertigten - flächigen Bauteil (100) mit einer ersten (101) und einer zweiten Deckplatte (111) und mindestens einer Stützkernzwischenlage (121), wobei der Dübel mindestens einen - zumindest ein Befestigungsmittel aufnehmenden - Spreizkörper (10) und mindestens einen im Spreizkörper (10) geführten Keilkörper (60) umfasst,
- wobei der Spreizkörper (10) im ungespreizten Zustand mit in einer sich nach unten hin verjüngenden Bohrung (51) sitzenden Keilkörper (60) mit Hilfe einer Dübelsetzeinrichtung (80) in eine entsprechende Ausnehmung (130) des Bauteils (100) eingesetzt wird, die die erste Deckplatte (101) und die Stützkernzwischenlage (121) durchdringt und als Sacklochausnehmung (115) in die zweite Deckplatte (111) bereichsweise hineinragt,
- wobei der Spreizkörper (10) mindestens zwei Hintergriffselemente (42) aufweist, die sich nach dem Einsetzen in die Ausnehmung (130) im Bereich der Stützkernzwischenlage (121) selbsttätig spreizen,
- wobei der Spreizkörper (10) nach dem Spreizen der Hintergriffselemente (42) entgegen der Dübelsetzrichtung (8) von unten her gegen die rückseitige Oberfläche der ersten Deckplatte (101) gezogen wird,
- wobei bei dem durch die Dübelsetzeinrichtung (80) fixierten Spreizkörper (10) der Keilkörper (60) zum Festklemmen der am Spreizkörper (10) angeformten Klemmelemente (52) in der Sacklochbohrung (115) in Dübelsetzrichtung (8) verschoben wird.

## Claims

1. A screw anchor to be set and fastened in planar components (100) made in a supporting-core type of construction, said components comprising first (101) and second cover plates (111) and at least one intermediate supporting-core layer (121), and said anchor having at least one spreader member (10) and at least one wedge element (60) guided for movement inside said spreader member, with the latter receiving at least one fastener, wherein:
- the screw anchor in its set condition extends through an opening (130) of component (100), said opening extending through first cover plate (101), through intermediate supporting-core layer (121) and section-wise into second cover plate (111) in the form of a blind bore (115);
- spreader member (10) has a top seat section (20) with at least one cylinder zone (21) which is at least substantially cylindrical;
- spreader member (10) has an engage-behind section (40) comprising at least two engagement elements (42) adapted to flare outwards resiliently;
- speader member (10) comprises a bottom spreader section (50) comprising at least two clamping elements (52) adapted to be flared outwards and to be clampingly secured in second cover plate (111);
- when the screw anchor is not in its set condition, wedge member (60) is disposed in the middle or bottom region for longitudinal movement in front of an opening (51) in spreader member (10), said opening (51) tapering in the anchor-setting direction; and
- when the screw anchor is in its set condition, cylindrical zone (21) engages the bore in first cover plate (101) inside the latter at least section-wise, said engage-behind elements (42) flare outwards and engage behind and rest against first cover plate (101), and clamping element (52) are placed into a radially clamping engagement of blind-hole recess (115) by the forwardly shifted wedge member (60).

2. Screw anchor as in claim 1, **characterized by** spreader member (10) having therethrough a central threaded bore (22) for receiving fastener (1).

3. Screw anchor as in claim 1, **characterized in that** engage-behind section (40) is secured to spreader member (10) at least in a form-fit and as a separate component.

4. Screw anchor as in claim 1, **characterized in that** opening (51) in spreader member (10) has a cylindrical section (57) and a frustroconical-surface section (58) for guiding wedge member (60).

5. Screw anchor as in claim 1, **characterized in that** wedge member (60) is cylindrical in shape.

6. Screw anchor as in claim 1, **characterized in that**, for forming clamping elements (52), spreader member (10) has in spreading section (50) longitudinal slits extending at least section-wise.

7. Screw anchor as in claim 1, **characterized in that**, with the screw anchor in its set condition, cylinder zone (21) of spreader member (10) has inside bore (105) a structured surface (26) so as to secure the anchor against rotation.

8. Screw anchor as in claim 1, **characterized in that** seating section (20) is secured at least in a form fit to spreader member (10) as a separate component.

9. A method of setting and fastening a screw anchor in a planar component (100) made in a supporting-core type of construction, said component comprising first (101) and second cover plates (111) and at least one intermediate supporting layer (121), said anchor comprising at least one spreader member (10) and at least one wedge element (60) guided for movement inside spreader member (10), with the latter adapted to receive at least one fastener, where:
- when spreader member (10) is in its non-flared condition, and with wedge member (60) seated in a downwardly tapering opening (51), spreader member (10) is set by means of anchor setting device (80) in a corresponding opening (130) in component (100), said opening (130) extending through first cover plate (101), through intermediate supporting-core layer (121) and section-wise into second cover plate (111) in the form of a blind hole (115);
- spreader member (10) comprises at least a pair of engage-behind elements (42) adapted to flare outwards by themselves in the area of intermediate supporting-core layer (121) after said anchor has been set in opening (130);
- following the flaring out of engage-behind elements (42), spreader member (10) is pulled against anchor setting direction (8) from below against the rear surface of first cover plate (101); and
- with spreader member (10) retained by anchor setting device (80), wedge member (60) is shifted in anchor setting device (8) to clamp in place in blind hole (115) the clamping elements (52) formed on spreader member (10).

## Revendications

1. Cheville destinée à être fixée dans des éléments plans de construction sandwich (100), composés d'une première plaque de recouvrement (101) et d'une deuxième plaque de recouvrement (111) et au moins d'une couche intermédiaire (121) formant une âme de renfort, la cheville étant composée au moins d'un corps expansible (10) qui contient au moins un moyen de fixation, et au moins d'un coin (60) logé dans le corps expansible,
- la cheville posée se trouvant dans un orifice (130) de l'élément de construction qui traverse la première plaque de recouvrement (101) et la couche intermédiaire (121) et qui passe, en partie, comme un trou borgne (115) dans la deuxième plaque de recouvrement,
- le corps expansible (10) ayant un tronçon d'assise supérieur (20) avec au moins une zone plus ou moins cylindrique (21),
- le corps expansible (10) ayant un tronçon de prise arrière (40) avec au moins deux éléments de prise arrière (42) écartés élastiquement,
- le corps expansible (10) ayant un tronçon expansible inférieur (50) avec au moins deux éléments de serrage (52) expansibles qui peuvent être bloqués dans la deuxième plaque de recouvrement (111),
- le coin (60), alors que la cheville n'est pas posée, se trouvant de façon déplaçable longitudinalement, dans la section du milieu ou dans la section inférieure, devant un orifice (51) du corps expansible (10) qui rétrécit dans le sens de pose de la cheville,
- la zone cylindrique (21) de la cheville, alors que la cheville est posée, adhérant tout au moins en partie dans la forure de la première plaque de recouvrement (101), les éléments de prise arrière (42) étant écartés et s'appuyant contre la première plaque de recouvrement (101) et les élements de serrage (52) étant bloqués radialement dans le trou borgne (115) par l'intermédiaire du coin (60) poussé en avant.

2. Cheville selon la revendication 1, **caractérisée en ce que** le corps expansible (10) présente un trou fileté central (22) destiné à recevoir le matériel de fixation (1).

3. Cheville selon la revendication 1, **caractérisée en ce que** le tronçon de prise arrière (40), en tant que composant séparé, est fixée sur l'élément expansible (10) au moins par engagement positif.

4. Cheville selon la revendication 1, **caractérisée en ce que** l'orifice (51) dans le corps expansible (10) présente une section cylindrique (57) et une section tronçonique (58) pour le guidage du coin (60).

5. Cheville selon la revendication 1, **caractérisée en ce que** le coin (60) a une forme cylindrique.

6. Cheville selon la revendication 1, **caractérisée en ce que** le corps expansible (10) présente des fentes oblongues, tout au moins dans une partie de la section expansible (50), pour la formation des éléments de serrage (52)

7. Cheville selon la revendication 1, **caractérisée en ce que**, la cheville étant alors posée, la zone cylindrique (21) dans la forure (105) du corps expansible (10) présente une structure de surface (26) assurant une sécurité anti-rotation de la cheville.

8. Cheville selon la revendication 1, **caractérisée en ce que** le tronçon d'assise (20), en tant que composant séparé, est fixé sur l'élément expansible (10) au moins par engagement positif.

9. Procédé pour le montage d'une cheville dans un élément plan de construction sandwich (100), composé d'une première plaque de recouvrement (101) et d'une deuxième plaque de recouvrement (111) et au moins d'une couche intermédiaire (121) formant une âme de renfort, la cheville étant composée au moins d'un corps expansible (10) qui contient au moins un moyen de fixation, et au moins d'un coin (60) guidé dans le corps expansible (10),
- le corps expansible (10) non écarté, avec le coin (60) qui est placé dans un orifice (51) rétrécissant vers le bas, étant placé, par l'intermédiaire d'un système de pose de cheville (80), dans un orifice adapté (130) de l'élément de construction (100) qui traverse la première plaque de recouvrement (101) et la couche intermédiaire (121) et qui entre en partie, comme un trou borgne (115), dans la deuxième plaque de recouvrement (111),
- le corps expansible (10) présentant au moins deux éléments de prise arrière (42) qui, après avoir été posés dans l'orifice (130), s'écartent automatiquement à l'intérieur de la couche intermédiaire (121),
- le corps expansible (10), après l'écartement des éléments de prise arrière (42), est tiré par le bas, dans le sens opposé au sens de pose de la cheville (8), vers la surface arrière de la première plaque de recouvrement (101),
- le coin (60) du corps expansible (10), fixé par le système de pose de la cheville (80), qui sert à bloquer les éléments de serrage (52) formés sur le corps expansible étant déplacé dans le trou borgne (115) dans le sens de pose de la cheville (8).
